# DEMANDE DE BREVET EUROPEEN

(11) **EP 2 458 081 A1**
(43) Date de publication de la demande: **30.05.2012**
(21) Numéro de dépôt: 11370011.6
(22) Date de dépôt: 23.11.2011
(51) Int. Cl.: D06H 7/16, B23K 26/08

(54) **Installation pour la découpe d'un textile notamment pour l'écaillage de la dentelle**

(30) Priorité: 24.11.2010 FR 1004569
(71) Demandeur: Ascodero Productique, 80340 Bray sur Somme (FR)
(72) Inventeur: Lestoquoy, Charles, 80340 Bray Sur Somme (FR); Doyen, Philippe, 80340 Bray Sur Somme (FR); Jacquemont, Franck, 80340 Bray Sur Somme (FR)
(74) Mandataire: Boubal, Denis Henri Jacques

(57) **Abrégé**

L'invention concerne une installation (1) convenant pour la découpe d'un textile présentant des motifs répétitifs, continus, périodiquement selon un axe de périodicité des motifs du textile, ladite installation comprenant :
-un bâti (2),
- des moyens (3) de vision, électroniques,
- des moyens (4) de découpe laser,
- des moyens de contrôle et de commande coopérant avec lesdits moyens de vision pour la détermination et la commande de la trajectoire de découpe le long des motifs du textile.

## Description

L'invention est relative à une installation pour la découpe d'un textile présentant des motifs répétitifs, continus, périodiquement selon un axe de périodicité du textile. Cette installation trouve une application particulière pour automatiser l'écaillage de la dentelle.

Aujourd'hui, cette opération d'écaillage, qui consiste à découper la zone de tulle, intermédiaire, entre deux lignes de motifs de dentelle successives est, à la connaissance du demandeur, toujours réalisée manuellement par des opérateurs, dans des milieux autorisés. Pour ce faire, l'opérateur doit faire suivre, à un outil de coupe, une trajectoire le long et à proximité de la ligne de motif de dentelle. Cette opération est particulièrement fastidieuse et requiert toute l'attention de l'opérateur. Il existe depuis longtemps un besoin important pour automatiser cette tâche.

L'art antérieur connaît toutefois, de la littérature brevet, des installations conçues pour la découpe de la dentelle. Il s'agit par exemple des installations des documents EP-0.606.347, WO-97/19.217, WO-97/02.376 ou encore WO-93/13.258.

Ces installations sont équipées d'un système de vision et d'une électronique permettant de piloter la coupe suivant une trajectoire le long et à proximité des motifs du textile. Il est par ailleurs connu d'utiliser un dispositif de coupe à laser, par exemple des documents EP-0.606.347, WO-97/19.217 ou encore WO-97/08.376.

Le document WO-93/13.258 enseigne par ailleurs un système de reconnaissance de motifs, adaptatif pour déterminer la trajectoire de façonnage.

Dans l'ensemble de ces documents, la découpe de la dentelle se fait sensiblement, au moins localement à l'horizontal, ce qui selon les constations de l'inventeur ne permettraient pas d'obtenir des résultats satisfaisants.

La dentelle étant un textile flexible déformable particulièrement vivant, il serait, selon les constatations de l'inventeur, lors de la découpe à l'horizontal, nécessaire d'étirer la dentelle afin d'éviter la formation de plis. Toutefois, selon ces mêmes constatations, en raison des tensions internes dues à cet étirement, la coupe provoquerait un déplacement significatif de la dentelle, à proximité de la zone de coupe, néfaste à la mise en oeuvre du procédé de suivi de trajectoires.

Le but de la présente invention est de pallier les inconvénients précités en proposant une installation convenant pour la découpe d'un textile et dont les performances permettent d'écailler la dentelle, avec précision et rapidité.

Un autre but de l'invention est de proposer une installation pour laquelle l'alimentation de la dentelle au niveau de la zone de coupe de ladite installation peut être automatisée, notamment entre les différents cycles de coupe.

D'autres buts et avantages de la présente invention apparaîtront au cours de la description qui va suivre qui n'est donnée qu'à titre indicatif et qui n'a pas pour but de la limiter.

Aussi, l'invention concerne une installation convenant pour la découpe d'un textile présentant des motifs répétitifs, continus, périodiquement selon un axe de périodicité des motifs du textile, ladite installation comprenant :
- un bâti,
- des moyens de vision, électroniques,
- des moyens de découpe laser,
- des moyens de contrôle et de commande coopérant avec lesdits moyens de vision pour la détermination et la commande de la trajectoire de découpe le long des motifs du textile.

Selon l'invention, ladite installation présente, en outre :
- des moyens pour suspendre et maintenir le textile, au niveau de la zone de coupe, comprenant un support plan orienté dans un plan globalement vertical, incliné par rapport à la verticale d'un angle α compris entre 0 et 15° sur lequel le textile, incliné par rapport à la verticale dudit angle α, est destiné à être plaqué au moins localement,
- un chariot déplaçable en translation par rapport au bâti dans une direction, sensiblement horizontale, parallèle au plan dudit support plan, ladite direction étant destinée à être parallèle audit axe de périodicité des motifs du textile, ledit chariot embarquant au moins lesdits moyens de vision, et au moins une partie des moyens de découpe laser, de telle façon à permettre le contrôle de la position du foyer de la découpe laser selon ladite direction horizontale,
- des moyens pour la commande de la position du foyer de la découpe laser dans une direction, parallèle audit plan dudit support plan et perpendiculaire à l'axe de déplacement du chariot,
- un patin, solidaire dudit chariot, destiné à coulisser le long dudit support plan, apte à glisser sur le textile en décollant le textile dudit support plan, le patin définissant la position du foyer de découpe laser.

Avantageusement, dans l'installation, au moins au niveau de la zone de coupe de ladite installation, le textile, suspendu, est mis en place principalement par l'action de la gravité, sous l'action de son propre poids ; la pente du support plan est suffisamment forte afin d'éviter la formation de plis, les frottements entre le textile et le support plan n'étant pas suffisant pour contrecarrer l'action de la gravité qui tend le textile vers le bas.

Si, dans ladite installation, il peut être prévu d'étirer le textile selon l'axe de périodicité des motifs du textile, cet étirement n'est pas réalisé directement dans l'axe de la zone de coupe, mais au-dessus de cette zone afin d'éviter la création de contraintes dans le textile susceptible de dégrader les performances de coupe.

Par ailleurs, l'installation peut présenter tout ou partie des caractéristiques optionnelles suivantes :
- le support plan est constitué par une plaque ajourée, inclinée par rapport à la verticale dudit angle α compris entre 0 et 15°, pourvue de perforations, ladite installation présentant un système d'aspiration, solidaire et dépaçable avec le chariot, situé de l'autre côté de la plaque ajourée par rapport au patin, apte à coopérer avec les perforations de la plaque ajourée de telle façon à maintenir localement le textile plaqué par aspiration sur ladite plaque ajourée, en aval du patin et/ou en amont dudit patin ;
- le chariot est dit premier chariot, lesdits moyens de découpe laser comprenant au moins des lentilles de focalisation destinées à focaliser le rayon laser sur le foyer de découpe et, dans laquelle, les moyens pour la commande de la position de la découpe laser dans une direction, parallèle audit plan du support plan et perpendiculaire à l'axe de déplacement du premier chariot comprennent un deuxième chariot, embarqué sur le premier chariot et déplaçable par rapport audit premier chariot dans ladite direction parallèle audit plan dudit support plan et perpendiculaire à l'axe de déplacement du chariot, ledit deuxième chariot embarquant au moins lesdites lentilles de focalisation, ou, alternativement ;
- les moyens pour la commande de la position de la découpe laser dans une direction parallèle au plan dudit support plan et perpendiculaire à l'axe de déplacement du chariot comprennent un système d'orientation de faisceau laser embarqué audit chariot, ledit système d'orientation de faisceau comprenant deux miroirs orientables, destinés à réfléchir successivement le faisceau, piloté chacun au moyen d'un moteur ;
- l'installation présente des moyens pour étirer le textile selon ledit axe de périodicité des motifs du textile au-dessus de la zone de coupe ;
- les moyens pour étirer le textile comprennent un tambour destiné à coopérer avec le textile, l'axe de périodicité des motifs du textile étant destiné à être dirigé dans la direction longitudinale du tambour, le tambour comprenant sur sa paroi cylindrique, sur la moitié de la longueur du tambour une première hélicoïde en saillie, et sur l'autre moitié de la longueur, une deuxième hélicoïde en saillie, de sens inversé ;
- les moyens pour étirer le textile comprennent une première pince, mobile, destinée à saisir une première extrémité du textile, et une deuxième pince, mobile, destinée à saisir une deuxième extrémité du textile, lesdites première et deuxième pinces étant mobiles en translation selon une direction parallèle à l'axe de déplacement du chariot ;
- l'installation comprend un ou plusieurs tambours, motorisés, destinés à permettre l'alimentation et le déplacement du textile au niveau de la zone de coupe de ladite installation ;
- lesdits moyens de contrôle et de commande comprennent un système de reconnaissance de motifs, adaptatifs, pour déterminer la trajectoire de coupe, en temps réel, lors du déplacement du chariot, apte à permettre la mise en oeuvre des étapes suivantes :
- reconnaissance d'un motif, en temps réel, ciblé par lesdits moyens de vision par comparaison avec un motif de référence,
- détermination d'un ou plusieurs taux de déformation par comparaison des dimensions du motif ciblé avec les dimensions du motif de référence,
- calcul en temps réel de la trajectoire de découpe associé au motif ciblé par application du ou des taux de déformation sur une trajectoire de découpe prédéterminée associée audit motif de référence ;
- l'installation peut présenter un berceau pour la réception, par gravité, de la partie découpée du textile ayant chutée, ainsi que des moyens pour basculer le berceau et provoquer la chute de la partie découpée du textile sur la bande d'un convoyeur ;
- le chariot embarque un dispositif anti-électrostatique agencé pour décharger le textile, localement, en amont de la découpe.

L'invention sera mieux comprise à la lecture de la description suivante, accompagnée des dessins en annexe parmi lesquels :
- la figure 1 est une vue schématique illustrant le principe de fonctionnement d'une installation conforme à l'invention,
- la figure 1a est une vue de détail de la partie découpée du textile, telle qu'illustrée à la figure 1,
- la figure 2 est une vue selon la coupe I-I, selon le plan Oxz,
- la figure 3 est une vue de l'installation telle qu'illustrée à la figure 1, à la fin d'un cycle de coupe,

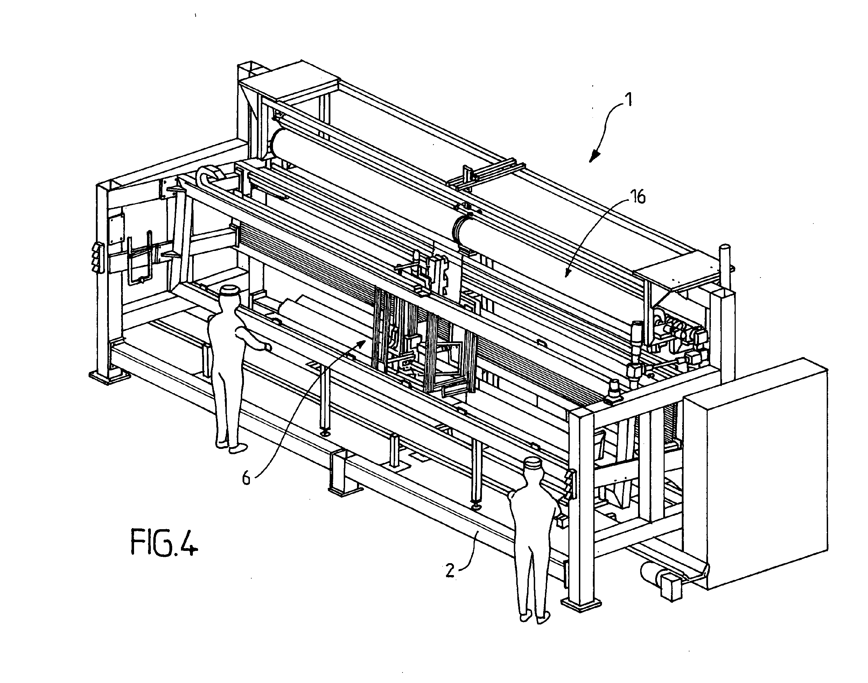

- la figure 4 est une vue en perspective d'une installation conforme à l'invention,
- la figure 5 est une vue de l'installation selon une coupe verticale traversant le chariot de l'installation,

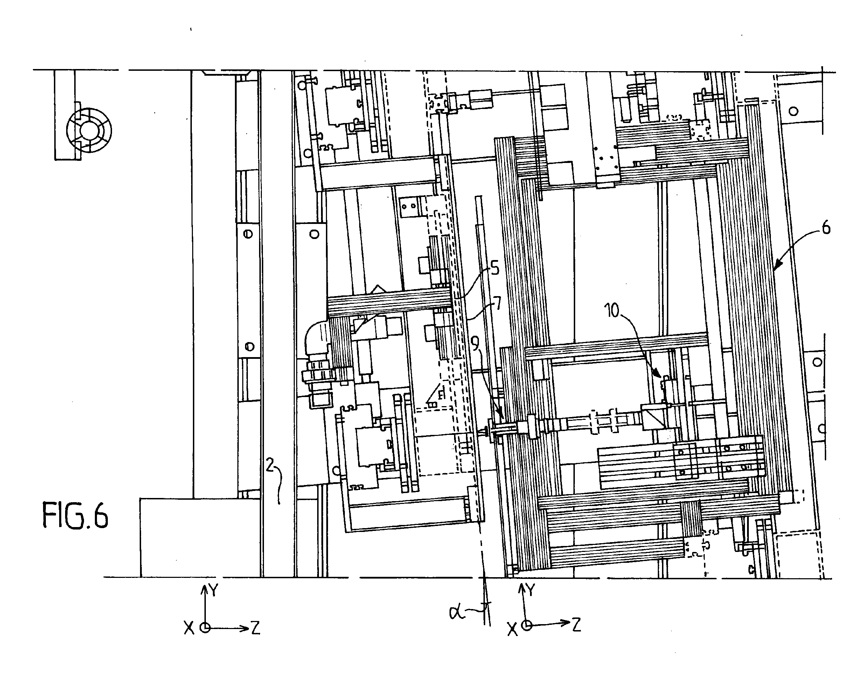

- la figure 6 est une vue de détail de la figure 5,
- la figure 7 est une vue de l'installation de la figure 4, selon une coupe horizontale,
- la figure 8 est une vue arrière de l'installation telle qu'illustrée à la figure 4, illustrant plus particulièrement le système d'aspiration.

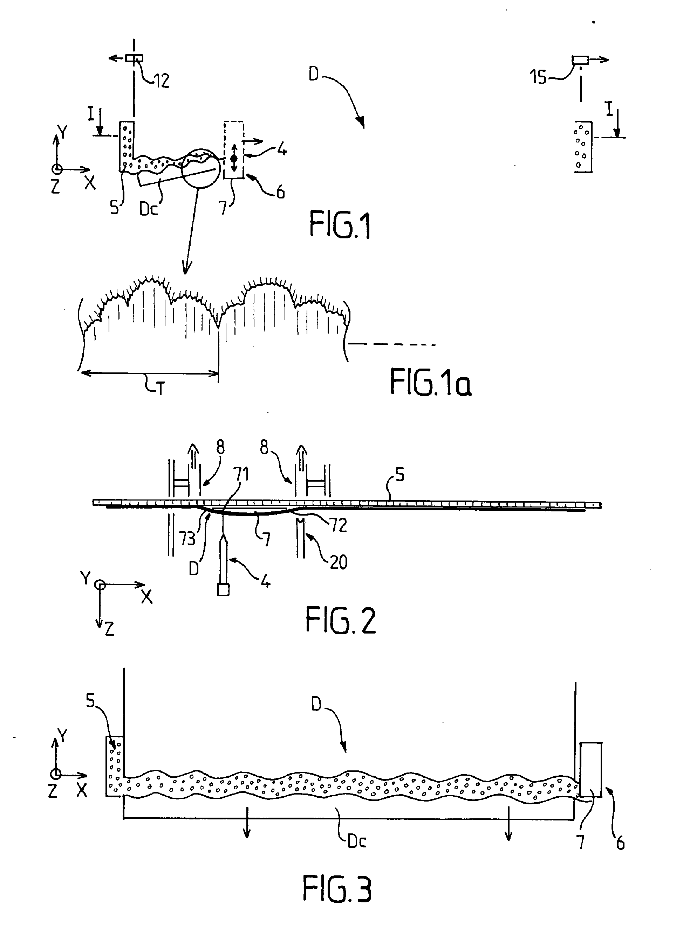

Aussi, l'invention concerne une installation 1 convenant pour la découpe d'un textile D présentant des motifs répétitifs, continus, périodiquement selon un axe de périodicité des motifs du textile. Cette installation convient plus particulièrement pour la découpe d'une dentelle présentant des lignes de motifs. Chaque ligne présente des motifs, continus répétitifs périodiquement selon un axe de périodicité des motifs du textile. A la figure 1a sont illustrés, par exemple deux motifs d'une même ligne, successifs. La période des motifs est ici repérée T. Ces lignes sont usuellement séparées par une zone de tulle. L'installation conviendra plus particulièrement pour écailler la dentelle, c'est-à-dire séparer successivement les différentes lignes de motifs entre elles.

Ladite installation 1 comprend un bâti 2 des moyens 3 de vision électroniques, plus particulièrement constitués au moins par une caméra, des moyens 4 de découpe laser et des moyens de contrôle et de commande coopérant avec lesdits moyens de vision pour la détermination et la commande de la trajectoire de découpe le long des motifs du textile.

Selon l'invention, ladite installation présente en outre :
- des moyens pour suspendre et maintenir le textile, au niveau de la zone de coupe, comprenant un support plan 5 orienté dans un plan globalement vertical, incliné par rapport à la verticale d'un angle α compris entre 0° et 15°, sur lequel le textile, incliné par rapport à la verticale dudit angle α est destiné à être plaqué, au moins localement,
- un chariot 6, déplaçable en translation par rapport au bâti 2 dans une direction Ox, sensiblement horizontale, parallèle au plan dudit support plan 5, ladite direction étant destinée à être parallèle audit axe de périodicité des motifs du textile, ledit chariot embarquant au moins les moyens 3 de vision et au moins une partie des moyens 4 de découpe laser de telle façon à permettre le contrôle de la position du foyer de la découpe laser selon la direction-horizontale-Ox,
- des moyens pour la commande de la position du foyer de la découpe laser dans une direction Oy, parallèle audit plan dudit support plan 5 et perpendiculaire à l'axe de déplacement du chariot,
- un patin 7, solidaire dudit chariot 6, destiné à coulisser le long dudit support plan 5, apte à glisser sous le textile D en décollant le textile dudit support plan 5, ledit patin 7 définissant la position du foyer de découpe laser.

Lesdits moyens pour suspendre et maintenir le textile permettent la mise en place du textile, et plus particulièrement de la dentelle principalement sous l'action de la gravité. A cet effet, la pente dudit support plan 5 est suffisamment forte pour que les frottements entre le textile et le support plan 5 ne s'opposent pas à l'action de la gravité, évitant ainsi la formation de plis. Dans le cas où le support 5 présente une faible inclinaison par rapport à la verticale c'est-à-dire un angle α strictement positif, le textile est alors positionné au-dessus dudit support plan 5 afin que le textile soit plaqué naturellement sur ledit support plan 5, sous l'action de la gravité.

Le chariot 6, déplaçable, embarque au moins les moyens 3 de vision et plus particulièrement la caméra, ainsi qu'au moins une partie des moyens 4 de découpe laser.

A chaque cycle de coupe, le chariot 6 est commandé au déplacement dans un seul sens, selon la direction Ox, par exemple de la gauche vers la droite, tel qu'illustré à la figure 1 ce qui permet de contrôler la commande du foyer de coupe laser selon ladite direction de déplacement de chariot Ox. Le foyer de coupe laser se déplace donc simultanément, selon la direction Ox, avec le chariot 6 dans un seul sens à chaque cycle de coupe.

Au contraire, dans la direction Oy parallèle au support plan 5 et perpendiculaire à l'axe de déplacement Ox du chariot, la position du foyer de coupe laser doit pouvoir être déplacé dans les deux sens, afin de pouvoir suivre la trajectoire des motifs du textile lors du déplacement du chariot 6.

A cet effet, l'inventeur a prévu deux modes de réalisation. Selon un premier mode de réalisation, illustré aux figures, les moyens pour la commande de la position de la découpe laser dans la direction Oy, parallèle audit plan dudit support plan 5 et perpendiculaire à l'axe de déplacement du chariot 6, dit premier chariot 6, comprenne un deuxième chariot 10 embarqué sur le premier chariot 6, déplaçable par rapport au premier chariot 6 dans ladite direction Oy parallèle au plan dudit support plan 5 et perpendiculaire à l'axe de déplacement du chariot 6. Ce deuxième chariot 10 permet d'embarquer au moins des lentilles de focalisation 9 desdits moyens 4 de découpe laser, destinées à focaliser le rayon laser sur le foyer de découpe. Selon ce mode de réalisation, la source laser peut être embarquée sur le premier chariot 6, solidaire à ce chariot, un jeu de miroirs permettant de désolidariser mécaniquement lesdites lentilles de focalisation 9 solidaires du deuxième chariot 10 de la source du laser (non illustrée).

Aussi, à chaque cycle de coupe selon ce mode de réalisation le chariot 6 est commandé au déplacement dans un seul sens, selon la direction Ox, par exemple de la gauche vers la droite permettant le contrôle de la position du foyer de coupe selon la direction Ox, le deuxième chariot 10 étant déplacé selon la direction Oy, dans les deux sens, afin de permettre le suivi de la trajectoire des motifs du textile. Ce premier mode de réalisation a fait l'objet d'un prototype illustré aux figures et a permis d'obtenir des vitesses de coupe jusqu'à 200 mm/seconde pour le déplacement du premier chariot 6. Selon ce mode de réalisation la vitesse de coupe est limitée par les oscillations du deuxième chariot 10 lors de la coupe.

Selon l'inventeur, la vitesse de coupe peut être sensiblement augmentée, selon le deuxième mode de réalisation (non illustré) ci-dessus développé, selon ce deuxième mode de réalisation, les moyens pour la commande de la position de la découpe laser dans une direction Oy parallèle audit plan dudit support plan 5 et perpendiculaire à l'axe de déplacement du chariot 6 comprennent un système d'orientation de faisceaux laser, embarqué audit chariot 6. Ce système d'orientation de faisceaux comprend deux miroirs orientables, destinés à réfléchir successivement le faisceau, pilotés chacun au moyen d'un moteur. En contrôlant l'orientation de ces deux miroirs il est possible de contrôler la position du foyer de coupe laser dans la direction Oy. Un tel système d'orientation est connu, en tant que tel, du document WO-97/19.217, illustré à la figure 3 de ce document. Dans ce document WO-97/19.217, ce système est utilisé de manière fixe par rapport au textile, pour contrôler le foyer de coupe selon les deux directions de l'espace. Dans l'invention ce système d'orientation est embarqué sur le chariot 6 et utilisé seulement pour contrôler la position du foyer de coupe selon la direction Oy, parallèle au plan dudit support plan 5 et perpendiculaire à l'axe de déplacement du chariot.

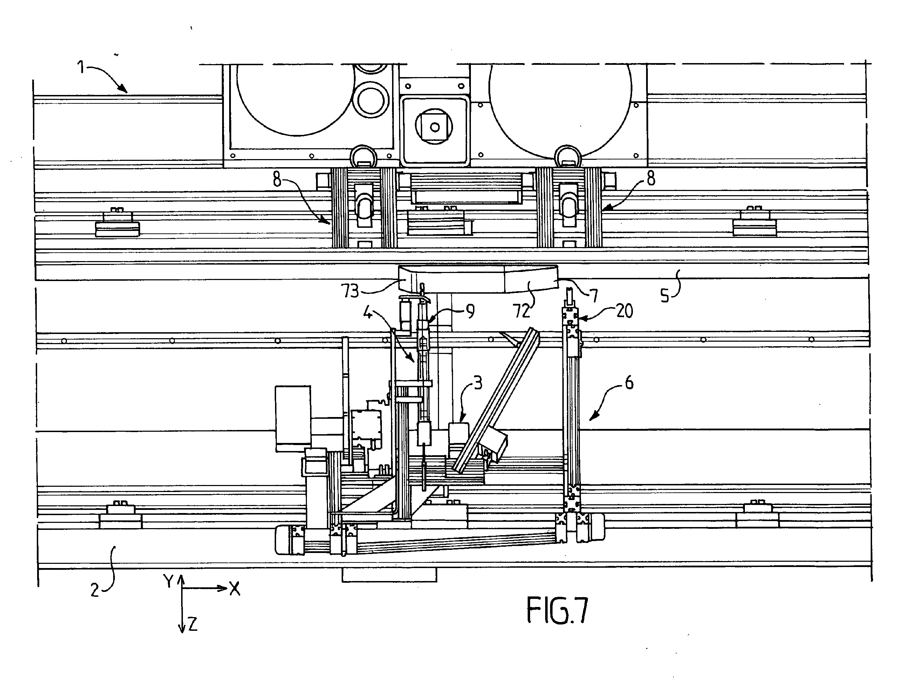

Le patin 7, plus particulièrement illustré selon un exemple aux figures 2 et 7, est un élément sensiblement plan dont l'une des faces est destinée à glisser le long dudit support plan 5, et l'autre face opposée est destinée à glisser sous la surface du textile D. Ce patin 7 est solidaire dudit chariot 6 et permet de décoller le textile dudit support plan 5 lors de la coupe, permettant de définir la position du foyer de découpe laser.

Ce patin permet, par ailleurs, de créer un écran pour le laser ayant traversé le textile et présente à cet effet des moyens pour dissiper l'énergie du laser. Selon le mode de réalisation illustré aux figures, ces moyens sont constitués d'une rainure 71 dans le patin dirigée selon la direction Oy dans le patin 7. Cette rainure 71 est constituée d'un matériau de préférence de couleur noire, résistant au laser. Le bord d'attaque 72 et le bord de fuite 73 du patin 7 peuvent être constitués par des plans inclinés.

Selon un mode de réalisation illustré aux figures, le support plan 5 peut être constitué par une plaque ajourée 5 inclinée par rapport à la verticale dudit angle α compris entre 0 et 15°, pourvue de perforations. L'installation présente, en outre, un système d'aspiration 8 solidaire et déplaçable avec ledit chariot 6 situé de l'autre côté de la plaque ajourée 4 par rapport au patin 7, apte à coopérer avec les perforations de la plaque ajourée de telle façon à maintenir localement le textile plaqué par aspiration sur ladite plaque ajourée, en aval du patin 7 et/ou en amont du patin 7. Cette disposition permet avantageusement que la partie découpée du textile Dc, telle qu'illustrée à la figure 1, sous l'action de la gravité ne vienne pas générer des contraintes dans le textile au niveau du patin 7. A cet effet, l'aspiration permet de maintenir le textile plaqué, au moins en aval du patin 7, voire également en amont du patin 7, la zone amont étant la zone du textile (à découper) vers laquelle se déplace le chariot lors de la coupe, la zone aval étant la zone du textile (déjà découpée) à partir de laquelle s'éloigne le chariot.

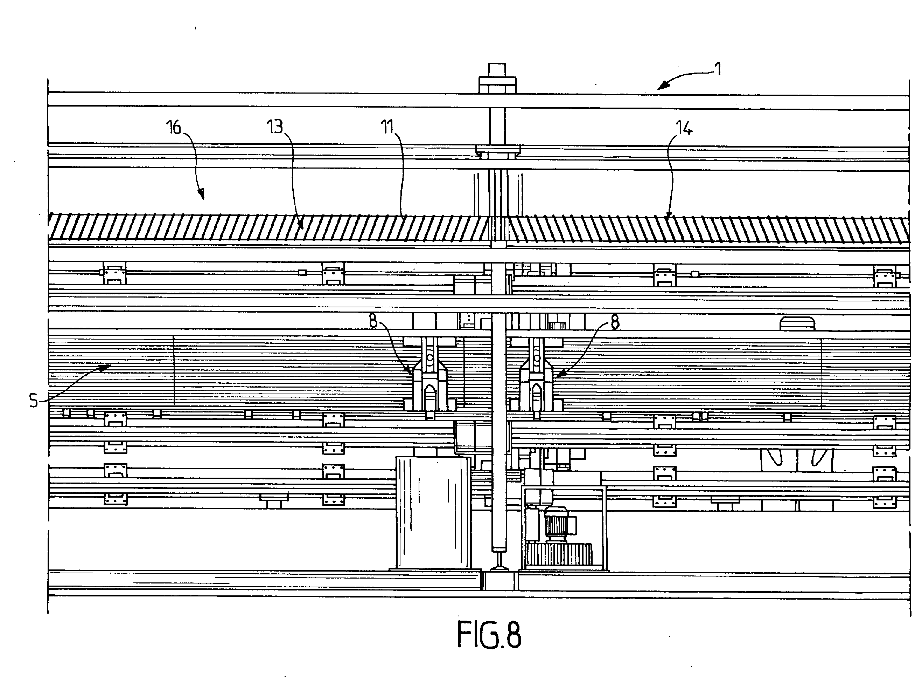

Selon l'exemple des figures, le système d'aspiration 8, tel qu'illustré à la figure 8, permet d'aspirer au niveau desdites zones aval et/ou amont.

Selon un mode de réalisation illustré plus particulièrement selon un exemple à la figure 7, le chariot 6 embarque également un dispositif anti-électrostatique 20 agencé pour décharger le textile, localement, en amont de la découpe.

Ce dispositif anti-électrostatique 20, permet de décharger le textile, et plus particulièrement la dentelle sensible aux charges électrostatiques qui pourraient éventuellement perturber la précision de la découpe.

Il s'agit plus particulièrement d'un dispositif anti-électrostatique 20, sans contact, connu de l'homme de l'art sous le nom « barre antistatique ». Ce dispositif permet d'émettre des ions permettant une neutralisation des charges électriques. Avantageusement, selon l'invention, ce dispositif anti-électrostatique permet de décharger le textile localement, juste en amont de la coupe, tel que cela est illustré à la figure 7.

Selon un mode de réalisation, l'installation peut présenter des moyens pour étirer le textile selon ledit axe de périodicité des motifs du textile au-dessus de la zone de coupe. Cet étirement est réalisé au-dessus de la zone de coupe, et non directement sur l'axe de la zone de coupe, afin de ne pas générer des contraintes au niveau de la zone de coupe, susceptibles de dégrader les performances lors du passage du foyer de coupe.

Selon un mode de réalisation illustré à la figure 1, ces moyens peuvent comprendre une première pince 12, mobile, destinée à saisir une première extrémité du textile et une deuxième pince 15, mobile, destinée à saisir une deuxième extrémité du textile. La première pince 12 et la deuxième pince 15 sont mobiles en translation, dans une direction parallèle à l'axe de déplacement du chariot, et permettent d'étirer le textile dans cette direction Ox.

Les moyens pour étirer le textile peuvent comprendre, en outre, un tambour 11, particulièrement illustré selon l'exemple de la figure 8 et destiné à coopérer avec le textile, l'axe de périodicité des motifs du textile étant dirigé dans la direction longitudinale du tambour 11.

Le tambour 11, tel qu'illustré à la figure 8, comprend sur sa paroi cylindrique, sur la première moitié de la longueur du tambour 11, une première hélicoïde 13, en saillie, et sur l'autre moitié de la longueur, une deuxième hélicoïde 14 en saillie, de sens inversé. Lors de la rotation du tambour, les deux hélices 13, 14 tendant, grâce aux frottements générés entre les hélices 13, 14 et le textile, à étirer le textile.

Selon un exemple de réalisation illustré aux figures, l'installation peut présenter un ou plusieurs tambours, motorisés, destinés à permettre l'alimentation et le déplacement du textile au niveau de la zone de coupe de ladite installation.

Notamment, entre chaque cycle de coupe par exemple, lors du retour du chariot 6 dans la position initiale, ces tambours permettent de déplacer le textile au niveau de la zone de coupe, en vue d'un nouveau cycle de découpe.

Une fois le textile positionné, les tambours sont arrêtés. Eventuellement, les pinces 12 et 15 peuvent être rapprochées puis fermées afin de saisir les deux extrémités du textile, puis écartées l'une de l'autre afin d'étirer le textile au-dessus de la zone de coupe.

L'aspiration du système d'aspiration 8 peut être mise en marche et le chariot 6 commandée au déplacement afin de procéder à la coupe.

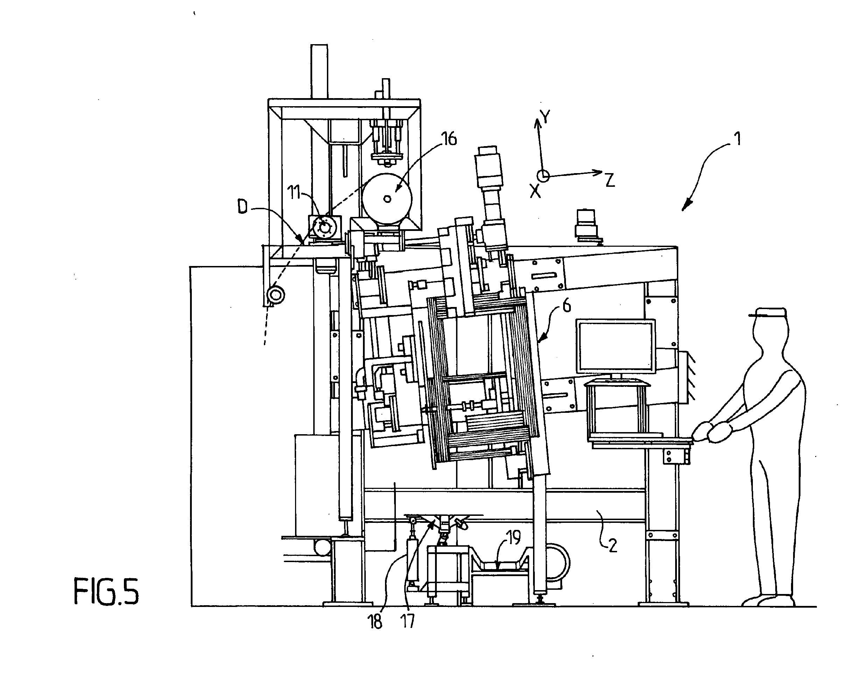

Une fois le cycle terminé, la partie du textile découpée chute sous l'effet de la gravité, et peut être récupérée dans un berceau 17 (voir figure 5). Des moyens 18 tels qu'un vérin peuvent permettre de basculer ce berceau 17 et provoquer ainsi la chute de la partie découpée du textile sur la bande d'un convoyeur 19.

Les moyens de contrôle et de commande de l'installation peuvent comprendre un système de reconnaissance de motifs, adaptatifs pour déterminer la trajectoire, en temps réel, lors du déplacement du chariot 6. A cet effet, les moyens 3 de vision électroniques, embarqués sur le chariot 6, doivent présenter un champ de vision ciblant le textile, en amont du foyer de coupe. Les dimensions du champ de vision doivent être suffisantes pour couvrir plusieurs motifs du textile en amont du foyer de coupe. La détermination de la trajectoire de coupe, en temps réel, est mise en oeuvre par les étapes suivantes :
- reconnaissance d'un motif en temps réel, ciblé par lesdits moyens de vision par comparaison avec un motif de référence,
- détermination d'un ou plusieurs taux de déformation par comparaison des dimensions du motif ciblé avec les dimensions du motif de référence,
- calcul en temps réel de la trajectoire de découpe associé au motif ciblé par application du ou des taux de déformation sur une trajectoire de découpe, prédéterminée, associée au motif de référence.

Lors du premier cycle de découpe, le motif de référence doit être préalablement enregistré dans une mémoire des moyens de contrôle et de commande. La trajectoire de découpe, prédéterminée, associée à ce motif de référence est également enregistrée au préalable. Par la suite, au cours des cycles de coupe, les dimensions du motif de référence peuvent être ajustées. A cet effet, l'ajustement peut être mis en oeuvre au moyen des motifs précédemment balayés par les moyens 3 de vision et le calcul d'une valeur moyenne des dimensions de ces motifs précédemment balayés. De même, la trajectoire de coupe, prédéterminée associée au motif de référence peut être ajustée, en conséquence.

Naturellement, d'autres modes de réalisation auraient pu être envisagés par l'homme du métier sans pour autant sortir du cadre de l'invention définie par les revendications ci-après.

## Revendications

1. Installation (1) convenant pour la découpe d'un textile (D) présentant des motifs (M) répétitifs, continus, périodiquement selon un axe de périodicité des motifs du textile, ladite installation comprenant :
- un bâti (2),
- des moyens (3) de vision, électronique,
- des moyens (4) de découpe laser,
- des moyens de contrôle et de commande coopérant avec lesdits moyens de vision pour la détermination et la commande de la trajectoire de découpe le long des motifs du textile,
**caractérisée en ce que** ladite installation présente, en outre :
- des moyens pour suspendre et maintenir le textile, au niveau de la zone de coupe, comprenant un support plan (5) orienté dans un plan globalement vertical, incliné par rapport à la verticale d'un angle α compris entre 0° et 15°, sur lequel le textile, incliné par rapport à la verticale dudit angle α, est destiné à être plaqué au moins localement,
- un chariot (6), déplaçable en translation par rapport au bâti dans une direction (Ox), sensiblement horizontale, parallèle au plan dudit support plan (5), ladite direction étant destinée à être parallèle audit axe de périodicité des motifs du textile, ledit chariot embarquant au moins lesdits moyens (3) de vision, et au moins une partie desdits moyens (4) de découpe laser de telle façon à permettre le contrôle de la position du foyer de la découpe laser selon ladite direction horizontale (Ox),
- des moyens pour la commande de la position du foyer de la découpe laser dans une direction (Oy), parallèle audit plan dudit support plan (5) et perpendiculaire à l'axe de déplacement du chariot (6),
- un patin (7), solidaire dudit chariot (6), destiné à coulisser le long dudit support plan (5), apte à glisser sous le textile (D) en décollant le textile dudit support plan (5), ledit patin (7) définissant la position du foyer de découpe laser.

2. Installation selon la revendication 1 dans laquelle le support plan (5) est constitué par une plaque ajourée (5), inclinée par rapport à la verticale dudit angle α compris entre 0° et 15°, pourvue de perforations, ladite installation présentant un système d'aspiration (8), solidaire et déplaçable avec ledit chariot (6), situé de l'autre côté de ladite plaque ajourée (4) par rapport au patin (7), apte à coopérer avec les perforations de la ladite plaque ajourée de telle façon à maintenir localement le textile plaqué par aspiration sur ladite plaque ajourée (5), en aval du patin (7) et/ou en amont dudit patin (7).

3. Installation selon la revendication 1 ou 2, dans laquelle ledit chariot (6) est dit premier chariot, lesdits moyens (4) de découpe laser comprenant au moins des lentilles de focalisation (9) destinées à focaliser le rayon laser sur le foyer de découpe et dans laquelle lesdits moyens pour la commande de la position de la découpe laser dans une direction (Oy), parallèle audit plan dudit support plan (5) et perpendiculaire à l'axe de déplacement du premier chariot (6) comprennent un deuxième chariot (10), embarqué sur ledit premier chariot (6), déplaçable par rapport audit premier chariot (6) dans ladite direction (Oy) parallèle audit plan support plan (5) et perpendiculaire à l'axe de déplacement du chariot (6), ledit deuxième chariot (10) embarquant au moins lesdites lentilles de focalisation (9).

4. Installation selon la revendication 1 ou 2 dans laquelle dans lesdits moyens pour la commande de la position de la découpe laser dans une direction (Oy), parallèle audit plan dudit support plan (5) et perpendiculaire à l'axe de déplacement du chariot (6) comprennent un système d'orientation de faisceau laser embarqué audit chariot (6), ledit système d'orientation de faisceau comprenant deux miroirs orientables, pilotés chacun au moyen d'un moteur, agencés pour réfléchir successivement le faisceau du laser.

5. Installation selon l'une des revendications 1 à 4, comprenant des moyens (11, 12, 15) pour étirer le textile selon ledit axe de périodicité des motifs du textile, au dessus de la zone de coupe de ladite installation.

6. Installation selon la revendication 5, dans laquelle lesdits moyens pour étirer le textile selon ledit axe de périodicité des motifs du textile comprennent un tambour (11) destiné à coopérer avec le textile, l'axe de périodicité des motifs du textile étant destiné à être dirigé dans la direction longitudinale dudit tambour, ledit tambour comprenant sur sa paroi cylindrique, sur la moitié de la longueur du tambour une première hélicoïde (13), en saillie, et sur l'autre moitié de la longueur une deuxième hélicoïde (14), en saillie, de sens inversé.

7. Installation selon la revendication 5 ou 6, dans laquelle lesdits moyens pour étirer le textile comprennent une première pince (12) mobile, destinée à saisir une première extrémité du textile et une deuxième pince (15) mobile, destinée à saisir une deuxième extrémité du textile.

8. Installation selon l'une des revendications 1 à 7, comprenant un ou plusieurs tambour(s) motorisé(s) (16) destiné(s) à permettre l'alimentation et le déplacement du textile au niveau de la zone de coupe de ladite installation.

9. Installation selon l'une des revendications 1 à 8 dans laquelle lesdits moyens de contrôle et de commande comprennent un système de reconnaissance de motif, adaptatif, pour déterminer la trajectoire de coupe en temps réel, lors du déplacement du chariot (6), apte à permettre la mise en oeuvre des étapes suivantes :
- reconnaissance d'un motif, en temps réel, ciblé par lesdits moyens de vision par comparaison avec un motif de référence,
- détermination d'un ou plusieurs taux de déformation par comparaison des dimensions du motif ciblé avec les dimensions du motif de référence,
- calcul en temps réel de la trajectoire de découpe associé au motif ciblé par application du ou des taux de déformation sur une trajectoire de découpe prédéterminée associée audit motif de référence.

10. Installation selon l'une des revendications 1 à 9, présentant un berceau (17) pour la réception, par gravité, de la partie découpée du textile, ainsi que des moyens (18) pour basculer le berceau (17) et provoquer la chute de la partie découpée du textile sur la bande d'un convoyeur (19).

11. Installation selon l'une des revendications 1 à 10, dans laquelle ledit chariot (6) embarque un dispositif anti-électrostatique (20), sans contact, agencé pour décharger le textile (D) en amont de la découpe.

12. Utilisation de l'installation selon l'une des revendications 1 à 11 pour l'écaillage de la dentelle.
